Europäisches Patentamt

European Patent Office

Office européen des brevets

(19)

(11) Publication number: **0 223 296 B1**

(12) **EUROPEAN PATENT SPECIFICATION**

(45) Date of publication of patent specification: 20.03.91   (51) Int. Cl.5: **H04N 5/32**

(21) Application number: 86201959.3

(22) Date of filing: **10.11.86**

(54) **A surgical apparatus with sub-add images.**

(30) Priority: 13.11.85 NL 8503118

(43) Date of publication of application:
27.05.87 Bulletin 87/22

(45) Publication of the grant of the patent:
20.03.91 Bulletin 91/12

(84) Designated Contracting States:
**DE FR GB**

(56) References cited:
EP-A- 0 088 609
GB-A- 2 057 221
US-A- 4 160 266

PATENT ABSTRACTS OF JAPAN, vol. 5, no.
74 (E-57)[746], 16th May 1981 & JP-A-56-23
084

(73) Proprietor: **N.V. Philips' Gloeilampenfabrieken
Groenewoudseweg 1
NL-5621 BA Eindhoven(NL)**

(72) Inventor: **van Woezik, Johannes Theodorus
Maria
c/o INT. OCTROOIBUREAU B.V. Prof. Holst-
laan 6
NL-5656 AA Eindhoven(NL)**

(74) Representative: **Scheele, Edial François et al
INTERNATIONAAL OCTROOIBUREAU B.V.
Prof. Holstlaan 6
NL-5656 AA Eindhoven(NL)**

Rank Xerox (UK) Business Services

## Description

The invention relates to an X-ray examination apparatus with an X-ray source, an X-ray detection system and a device for performing digitalised images and for digital image processing.

An X-ray examination apparatus of this kind is known from GB 2020945. If the method of digital image subtraction described there is employed in, for example, a surgical fluoroscopy unit, it has the disadvantage that the image display is temporarily interrupted. Furthermore, subtraction images as such are often difficult to recognise anatomically. Particularly in surgical fluoroscopy equipment in which there is no clear boundary between diagnostics and therapy, it is always desirable to have a clear, anatomically recognisable image at one's disposal.

From PAJP, JP-A-5 623 084 it is known to use an image processing unit for on-line subtraction of a video signal from a delayed videosignal, thus creating a difference signal and to supply the difference signal in synthesis with the video signal to a display unit. By this, the changes in the original X-ray images compared to the delayed X-ray image are enhanced. When the difference image is superimposed onto the original image, these changes can be more easily interpreted by a physician. The known system has a disadvantage, that the reference image changes in time, since it is the image that is delayed by a predetermined time compared to the current X-ray image. This makes the apparatus less fit for imaging objects, of which a change with respect to a reference image that is taken at a predetermined point in time must be observed. Therefore as a reference image a road map of veins, which is made from successively taken images of a moving quantity of contrast medium, cannot be used.

It is an object of the invention to provide for an X-ray examination apparatus by which a clear recognisable image can be made, and which allows for the easy use of different reference images. To that end, an X-ray examination apparatus according to the invention is characterized in that the X-ray examination apparatus further comprises at least a first memory (16) for storing the digitized video signal of the current X-ray image and a second memory (18) for storing the digitized video signal of the reference image, respective outputs of the memory devices being connected to an input of the image processing unit (20), the display means comprising two display units (36,38) one of which is by a first switching device connectable to either the output of the first memory device or an output of the image processing device (20), the other display unit being connectable by a second switching device (28) to either the output of the second memory (18) or to the output of the image processing device (20).

By making use of a digital memory, a reference image that best fits the examination can be stored in one of the memories. The reference image can be directly viewed on a first display unit, so that a choice of reference image is facilitated. When choosing a reference image from an image store, the current image can be directly observed on a second display unit, so that a check on a patient during manipulation remains possible. When a satisfactory reference image has been found, the switch connecting the display unit to the memory in which the reference image is stored, can be set to connect to the output of the image processing device. On the display unit that previously showed the reference image, now the corrected image appears. When the switch connecting the second display unit to the memory in which the current image is switched to the output terminal of the image processing device, both display units show the corrected image, thus facilitating observation from different angles.

It is noted that an X-ray examination apparatus which contains a first memory for storing a current image, a second memory for storing a reference and first and second display units for displaying the reference image and the difference image is known from EP-A1-88609. The X-ray examination apparatus as disclosed in this patent application does however, not provide for a difference image that is superimposed on the current image. One of the display untis shows the reference image continuously while the other display unit shows the difference image. No possibilities are present to either switch one of the monitors to show the current image or to switch both display units to show the (superimposed) difference image for easy viewing from all angles.

Since, in an apparatus according to the invention, a difference image is not displayed or recorded as such but is added to a real-time image, an easily anatomically recognisable image in which the most relevant information is entered in the form of a subtraction image is available throughout the examination and/or therapy. This information may, for example, show the progress of a catheter in a blood vessel. By intensifying the digitalised difference image for addition to the ral-time image the information can be shown more or less pronouncedly in the processed image. Real-time image display can be combined without interruption with the display, as desired, of an image to be freely chosen from a series of image exposures (last image hold). Since the subtraction-addition processing mechanism can be freely switched on and off, a subtraction image one formed can be replaced by a last-image hold image i.e. an image which is more readily anatomically recognizable without interruption of the current display being necessary for the purpose.

A preferred embodiment of the invention is equiped to that end, with, for example a CCD memory designed such that both the said advantages are achievable and complete noise reduction can always be achieved during the image treatment.

A preferred embodiment of the invention includes a detection system with an X-ray image-intensifier tube and a television camera tube for picking up images from the X-ray image-intensifier tube. In this arrangement the X-ray image-intensifier tube can for this purpose be mounted together with the X-ray source in a movable C-arm, so that the whole can be moved in relation to a patient who is to be examined or treated. On the other hand, the C-arm can be incorporated in a stand so that movement can be effected between the C-arm, and a subject lying on a table.

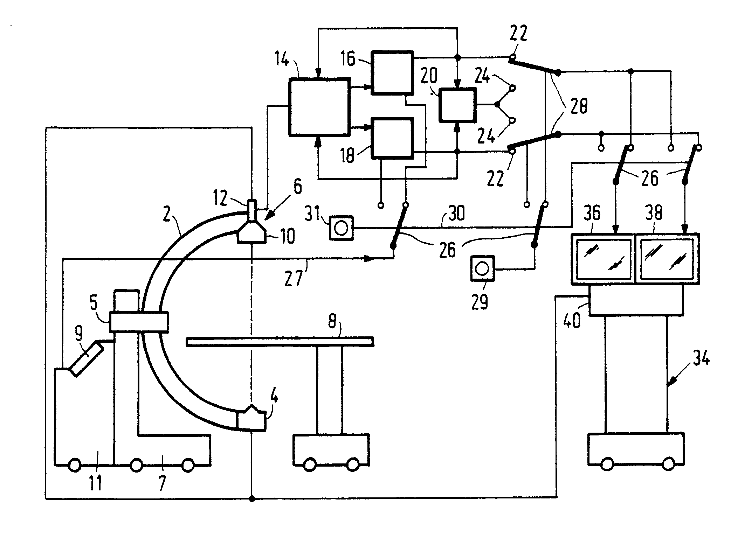

Some preferred embodiments of the invention will now be described in greater detail with reference to the drawing.

The only figure in the drawing shows schematically a surgical fluoroscopic apparatus according to the invention. An apparatus of this kind comprises an adjustable C-arm 2, with an X-ray source 4 and an X-ray detector 6 and a fluoroscopy table 8. In order to achieve good positioning of the X-ray source and the X-ray detector in relation to a patient lying on the fluoroscopy table, the C-arm is fitted by means of a holder 5 in a movable carrier 7, on which a control panel 9 and a cupboard 11 in which supply and control devices for the apparatus are incorporated. The X-ray detector here includes an X-ray image-intensifier tube 10 with a television camera tube 12 which is connected to an analogue-to-digital converter 14. The analogue-to-digital converter is connected here, two memory devices 16 and 18, to a subtraction device 20 and to output terminals 22 and 24. With the aid of subtraction device 26 one of the two memory devices can be actuated with a signal 27. With the aid of button 31 one of the memory devices can be selected to act as a mask-memory. With the aid of a switching device 28 the subtraction can be switched on and off with a button 29. An image-display device 34 can thus be connected to the output terminals 22 or 24 of the memory circuitry. The image-display device is here fitted with a control device 40 for a first monitor 36 for the display of a processed image and for a second monitor 38 for the display of a mask image. The control device 40 is also connected to the X-ray detector 6 for synchroniency the X-ray tube and the X-ray image-intensifier with the monitoring.

In an apparatus of this kind it is now possible, by operating the particular switch, to select instantaneously a subtraction image which is thus in fact not a real subtraction image but a sum image of a moving image and subtraction-image information from a mask image and a moving image. By altering the degree of intensification of the subtraction-image information, which can be executed in a known manner in the control device 40 the latter can be displayed more or less pronouncedly in the relevant moving image. An advantage of this arrangement is especially that, even during the formation of a processed image, i.e. the performance of digital subtraction and digital addition, good noise suppression can be maintained. The clear and comprehensive image display makes it clear at all timed what is happening in the equipment. The latter remains the case even if, for example, owing to a fault in the activation process, non-realistic image formation were to occur. This is mainly achieved by the fact that during processing two similar images are used, one of which is always displayed when two monitors are used. If the doctor in charge prefers to work with images corresponding more directly to reality, only the switch for image subtraction need be set to the non-operative position and he has a direct fluoroscopic image before him.

Last-image hold and image subtraction (here, therefore, sub-add) can here be achieved completely independently of each other and, although a subtraction image cannot be freely manipulated during the last-image hold operation, a subtraction image can always be replaced by a more clearly recognisable last-image hold image. There is thus a clear image as desired for therapy available without any interruption.

## Claims

1. An X-ray examination apparatus with an X-ray source (4), an X-ray detection system (6) for supplying a sequence of X-ray images as a digitized video signal to an image processing device (20) for forming a difference image by subtraction of a current X-ray image from a previously taken reference X-ray image and for adding the difference image to the current image thus forming a corrected image, and display means (34) for displaying the corrected image, characterized in that, the X-ray examination apparatus further comprises at least a first memory (16) for storing the digitized video signal of the current X-ray image and a second memory (18) for storing the digitized video signal of the reference image, respective outputs of the memory devices being connected to an input of the image processing unit (20), the display means comprising two display units (36,38) one of which is by a first switching device (28) connectable to either the output of the first memory device or an output of the image processing device (20), the other display unit being connectable by a second switching device (28) to either the output of the second memory (18) or to the output of the image processing device (20).

2. An X-ray examination apparatus as claimed in Claim 1, characterized in that the display units (36,38) are each connected to a respective third and fourth switching device (26) for connecting the display units either to the first switching device (28) or to the second switching device (28).

3. An X-ray examination apparatus as claimed in Claim 1 or 2, characterized in that the memories are CCD-devices.

4. An X-ray examination apparatus as claimed in any of the preceding claims, in which the X-ray detection system incorporates an X-ray image-intensifier tube (10), the image on which can be picked up by a television camera tube (12).

5. An X-ray examination apparatus as claimed in any of the preceding claims, in which the X-ray source (4) and an X-ray detector (6) are fitted together with a television camera tube (12) to a C-arm (2) forming part of a surgical X-ray fluoroscopy system.

## Revendications

1. Appareil d'examen à rayons X comportant une source de rayons X (4), un système de détection de rayons X (6) pour fournir une séquence d'images de rayons X en tant que signal vidéo numérisé à une unité de traitement d'image (20) afin de former une image de différence en soustrayant une image de rayons X du moment d'une image de rayons X de référence prise précédemment et pour additionner l'image de différence à l'image du moment afin de former une image corrigée, et une unité d'affichage (34) pour afficher l'image corrigée, caractérisé en ce qu'il comprend, en outre, au moins une première mémoire (16) pour stocker le signal vidéo numérisé de l'image de rayons X du moment et une seconde mémoire (18) pour stocker le signal vidéo numérisé de l'image de référence, des sorties respectives des mémoires étant connectées à une entrée de l'unité de traitement d'image (20), le moyen d'affichage comprenant deux unités d'affichage (36, 38), dont l'une peut être connectée par un premier dispositif de commutation (28) à la sortie de la première mémoire ou à une sortie de l'unité de traitement d'image (20), l'autre unité d'affichage pouvant être connectée par un second dispositif de commutation (28) à la sortie de la seconde mémoire (18) ou à la sortie de l'unité de traitement d'image (20).

2. Appareil d'examen à rayons X suivant la revendication 1, caractérisé en ce que les unités d'affichage (36, 38) sont connectées chacune à un troisième et un quatrième dispositif de commutation respectif (26) pour connecter les unités d'affichage soit au premier dispositif de commutation (28), soit au second dispositif de commutation (28).

3. Appareil d'examen à rayons X suivant la revendication 1 ou 2, caractérisé en ce que les mémoires sont des mémoires CCD.

4. Appareil d'examen à rayons X suivant l'une quelconque des revendications précédentes, dans lequel le système de détection de rayons X comprend un tube intensificateur d'image de rayons X (10), dont l'image peut être captée par un tube de prise de vues de télévision (12).

5. Appareil d'examen à rayons X suivant l'une quelconque des revendications précédentes, dans lequel la source de rayons X (4) et un détecteur de rayons X (6) sont montés tous deux, avec un tube de prise de vues de télévision (12), sur un bras en forme de C (2) faisant partie d'un système de fluoroscopie à rayons X à usage chirurgical.

## Ansprüche

1. Röntgenuntersuchungsgerät mit einer Röntgenquelle (4), einem Röntgendetektorsystem (6) zum Ausgeben einer Reihe von Röntgenbildern als digitalisiertem Videosignal an eine Bildbearbeitungseinrichtung (20) zur Bildung eines Unterschiedsbildes durch Subtraktion eines laufenden Röntgenbildes von einem zuvor angefertigten Bezugs-Röntgenbild und zum Addieren des Unterschiedsbildes beim laufenden Bild, wodurch ein korrigiertes Bild entsteht, und Sichtgerät (34) zum Darstellen des korrigierten Bildes, dadurch gekennzeichnet, daß das Röntgenuntersuchungsgerät außerdem einen ersten Speicher (16) zum Speichern des digitalisierten Videosignals des laufenden Röntgenbildes und einen zweiten Speicher (18) zum Speichern des digitalisierten Videosignals des Bezugsbildes enthält, wobei jeweilige Speicherausgänge an einen Eingang der Bildbearbeitungseinrichtung (20) angeschlossen sind, und das Sichtgerät zwei Wiedergabeeinheiten (36, 38) enthält, von denen eine Wiedergabeeinheit über eine erste Schalteinheit (28) an den Ausgang des ersten Speichers oder an einen Ausgang der Bildbearbeitungseinrichtung (20) anschließbar ist, und die andere Wiedergabeeinheit über eine zweite Schalteinheit (28) an den Ausgang des zweiten Speichers (18) oder an den Ausgang der Bildbearbeitungseinrichtung (20) anschließbar ist.

2. Röntgenuntersuchungsgerät nach Anspruch 1, dadurch gekennzeichnet, daß die Wiedergabeeinheiten (36, 38) mit je einer jeweiligen dritten und vierten Schalteinheit (26) zum Verbinden der Wiedergabeeinheiten mit der ersten Schalteinheit (28) oder mit der zweiten Schalteinheit (28) verbunden sind.

3. Röntgenuntersuchungsgerät nach Anspruch 1 oder 2, dadurch gekennzeichnet, daß die Speicher Ladungsverschiebe-Elemente (CCD) sind.

4. Röntgenuntersuchungsgerät nach einem oder mehreren der vorangehenden Ansprüche, in dem das Röntgendetektorsystem eine Röntgenbild-Verstärkerröhre (10) ist, deren Bild von einer Fernsehkameraröhre (12) übernommen werden kann.

5. Röntgenuntersuchungsgerät nach einem oder mehreren der vorangehenden Ansprüche, in dem die Röntgenquelle (4) und ein Röntgendetektor (6) zusammen mit einer Fernsehkameraröhre (12) zu einem einen C-Arm bildenden Teil eines ärtzlichen Röntgendurchleuchtungssystems zusammengebaut sind.